# EUROPEAN PATENT APPLICATION

(11) **EP 1 391 152 A1**
(43) Date of publication of application: **25.02.2004**
(21) Application number: 03447179.7
(22) Date of filing: 03.07.2003
(51) Int. Cl.: A01N 1/02

(54) **Thinner for conservation of fresh and frozen sperm**

(30) Priority: 19.08.2002 EP 02447156
(71) Applicant: Stoeterij Zangersheide N.V., 3620 Lanaken (BE)
(72) Inventor: De Backer, Leo, 2950 Kapellen (BE); Poncelet, Steven, 3590 Diepenbeek (BE)
(74) Representative: De Clercq, Ann

(57) **Abstract**

The present invention relates to a novel thinner for the conservation of fresh and frozen sperm in liquid form. The invention preferably relates to the conservation of frozen or fresh sperm as well as the fertilization of oocytes with frozen or fresh horse sperm. The invention further relates to the uses of said compositions, methods for preparing said thinners, methods for preparing sperm solutions comprising the same, vials comprising the same as well as their preparation method, as well as methods to preserve sperm or fertilize oocytes based thereon.

## Description

### FIELD OF THE INVENTION

The proposed invention is based on the protective effect of milk proteins for the improvement of the viability of sperm cells and their disposition with respect to fertility, in anticipation of artificial insemination.

### BACKGROUND OF THE INVENTION

With the techniques currently used for artificial insemination, the conservation of sperm in anticipation of the insemination process presents a problem.

After collection, the sperm very quickly loses its capacity for fertilization. In order to remedy this situation, thus to have the possibility to conserve the sperm until the moment of artificial insemination, one needs to have recourse to an adapted environment and a diluting agent as quickly as possible following the collecting of the sperm.

The duration for conservation that can be achieved depends on the thinner used and on the conservation conditions. In general, the conservation period may fluctuate between a few hours and a few days. For some species, it is possible to prolong the conservation term by deep-freezing the sperm but this technique may also result in a destruction or inactivity of the sperm and thus may result in a lowered fertility.

Other diluting agents or thinners are known for the conservation of frozen sperm; all of these thinners contain nutrients, a buffer, and mineral salts.

The thinners ensure a better and more comfortable conservation and maintain the fertility of the sperm.

Amongst the thinning agents that are best known for the conservation of sperm of different species of animals, for instance sheep, cattle, pigs and horses, we often find milk or thinners based on milk.

Temperature also plays a big role in the conservation. The metabolic processes proceed completely differently at 5°C than at 20°C. While there have been various studies on this subject, using different thinners, the results are quite divergent. For instance, Varner *et al.* [Theriogenology, (32)515-525, (1989)] used "Kenny" thinner and finds no difference whatsoever in the fertility with the use of sperm kept at 5°C and at 20°C. Squires *et al.* [Proc 11^{th} International Congress on Animal Reproduction and Al, Dublin, Ireland, (3)297, (1988)] use the same thinner and achieve a better fertility with sperm stored at 5°C, but only in the case of certain studs.

As most carriers and veterinarians have their services geared to the conservation of fresh sperm at a temperature of 5°C, the present invention aims amongst others to develop diluting agents on that basis.

The duration of the conservation life has also become a subject of controversy. Certain authors [Douglas-Hamilton et al., Theriogenology, (22) 291-304, (1984)] are using doses 6 to 24 hours after collection and are getting in-foal mares as a result. Others [Squires et al., Proc. 11^{th} International congress on Animal Reproduction and Al, Dublin, Ireland, (3) 297, (1988)] do not achieve any kind of pregnancy with sperm that was preserved for 48 hours at 20°C. A more recent study [Heiskanten et al., Theriogenology (42) 1043-1051 (1994)] used sperm that was stored for 70-80 hours at 5°C in the supplemented "Kenney" thinner and obtained gestation percentages between 57% and 77% per cycle.

Hence, there have been many studies on the fertility rate achieved with sperm with thinners, but due to the small scale experiments and the many differences between experiments, it is very difficult to draw a solid conclusion. The experiments described in the prior art either show much variation between experiments or inseminate at different time points.

There is a need for thinning agents which preserve the viability of sperm cells, and which preferably are easy to use and store.

### SUMMARY OF THE INVENTION

The invention relates to a liquid composition (of any volume) comprising per liter:

| | | |
|---|---|---|
| Glucose monohydrate | 0.1-50 g, | preferably 21-33 g, |
| Lactose monohydrate | 0.1-50 g, | preferably 21-33 g, |
| Sodium citrate dihydrate | 0.1-1 g, | preferably 0.2-0.4 g, |
| Potassium citrate | 0.1-1 g, | preferably 0.3-0.6 g, |
| Hepes | 0.1-10 g, | preferably 3.5-5.1 g, |
| Non-fat powdered milk | 40-60 g, | preferably 45-55 g, |
| optionally glycerine | 30-50 g, | preferably 40 g, |
| optionally, antibiotics | 10-100 mg, | preferably 37-78 mg, and, |
| water (to 1 liter). | | |

The amount of Glucose monohydrate may be 0.5, 1, 3, 12, 17, 21, 33, 40, 45 or 50 g. The amount of Lactose monohydrate may be 0.5,1, 3, 12, 17, 21, 33, 40, 45 or 50 g. The amount of Sodium citrate dihydrate may be 0.2, 0.3, 0.4, 0.5, 0.6, 0.7, 0.8, 0.9 or 1 g. The amount of Potassium citrate may be 0.2, 0.3, 0.4, 0.5, 0.6, 0.7, 0.8, 0.9 or 1 g. The amount of Hepes may be 0.3, 0.5, 1, 1.2, 2.3, 3.5, 4.9, 5.1, 7.5 or 10 g. The amount of Non-fat powdered milk may be 45, 47, 53, 55, 56, 58 or 60 g The optional amount of glycerine may be 10, 20, 30, 40, 50 g The optional amount of antibiotics may be 15, 23, 37, 42, 56, 78, 92 or 100 mg.

Any specific combination of the above given, individualized amounts of glucose monohydrate, lactose monohydrate, sodium citrate dihydrate, potassium citrate, Hepes, non-fat powdered milk, the optional amount of glycerine and the optional amount of antibiotics is embodied in the present invention.

According to a specific embodiment, the invention relates to a liquid composition (of any volume) comprising per liter:

| | |
|---|---|
| Glucose monohydrate | 27.2 g, |
| Lactose monohydrate | 1.5 g, |
| Sodium citrate dihydrate | 0.25 g, |
| Potassium citrate | 0.41 g, |
| Hepes | 4.75 g, |
| Non-fat powdered milk | 50 g, |
| optionally glycerine | 40 g, |
| optionally, antibiotics | 50 mg, and, |
| water (to 1 liter). | |

Said milk in said liquid composition can be Gloria® manufactured by Nestle®.

According to a further embodiment said water in said liquid composition is demineralised; preferably sterilized.

According to a further embodiment said antibiotic is Gentamycin. Gentamycin is an ideal antibiotic for use with living cultures, as it has a broad antibacterial spectrum and antimycoplasmal activity and is free from cell toxicity. It has biological and biochemical properties which render it superior to the use of Penicillin and Streptomycin. Normally it is used in concentrations of 25-50µg/ml. As well as being active against many gram positive or gram negative organisms, Gentamycin is active against strains of Proteus and Staphylococcus, which can sometimes be resistant to a Penicillin/Streptomycin mix. Unlike Penicillin and Streptomycin, Gentamycin is active against Pseudomonas strains. Gentamycin is stable over a pH range of 2 to 10, thus ideal for the use in the extender. Gentamycin is stable at all temperatures and can withstand autoclaving. Gentamycin can thus be added before sterilization of the solution, other antibiotics such as Penicillin and Streptomycin are inactivated or reduced by about 50% by autoclaving. Gentamycin is ideal for transport of clinical specimens in which overgrowth of bacteria should be avoided.

According to a further embodiment said liquid composition has a pH between 6.3 and 7.0. Possibly said pH is 6.3, 6.4, 6.5, 6.6, 6.7, 6.8, 6.9 or 7.0.

The present invention relates to a powder composition, which upon dissolving in water provides a liquid composition as described above. Said powder composition may be stored in the dark at a temperature between about 15 and 25°C, optionally for an unlimited time. It will be understood that in order to make 1 liter of the liquid composition of the present invention, the powder composition comprises

| | | |
|---|---|---|
| Glucose monohydrate | 5 0.1-50 g, | preferably 21-33 g, |
| Lactose monohydrate | 0.1-50 g, | preferably 21-33 g, |
| Sodium citrate dihydrate | 0.1-1 g, | preferably 0.2-0.4 g, |
| Potassium citrate | 0.1-1 g, | preferably 0.3-0.6 g, |
| Hepes | 0.1-10g, | preferably 3.5-5.1 g, |
| Non-fat powdered milk | 40-60 g, | preferably 45-55 g, |
| optionally glycerine | 30-50 g, | preferably 40 g, and |
| optionally, antibiotics | 10-100 mg, | preferably 37-78 mg, |

and preferably, the powder composition comprises

| | |
|---|---|
| Glucose monohydrate | 27.2 g, |
| Lactose monohydrate | 1.5 g, |
| Sodium citrate dihydrate | 0.25 g, |
| Potassium citrate | 0.41 g, |
| Hepes | 4.75 g, |
| Non-fat powdered milk | 50 g, |
| optionally glycerine | 40 g, and |
| optionally, antibiotics | 50 mg. |

The person skilled in the art will appreciate that in order to make more or less of the liquid composition of the present invention, the amounts of the individual components of the powder composition will have to be adapted mutatis mutandis. For instance, the above mentioned amounts of the powder composition are divided by 2 if only 0.5 liter of the liquid composition of the present invention is contemplated.

The invention also relates to a liquid composition prepared by dissolving a powder composition as defined above, using water; preferably demineralised and/or sterilized water.

According to a further embodiment the liquid composition according to the present invention may be sterilized using an Ultra High Temperature (UHT) method.

According to a further embodiment said liquid composition as defined is stored at about 5°C. Preferably this will be done for maximally 7 days.

According to a further embodiment, said liquid composition as defined is stored between - 15°C to -25°C, preferably at about -20°C.

Additionally, the present invention relates to the liquid composition as described herein, wherein said composition is aliquoted before storing.

According to a further embodiment, said liquid composition as defined above is stabilized at room temperature, e.g. 15°C to 25°C, for at least about 30 min. When used for primary dilution of raw semen, or before centrifugation, the liquid composition may be heated to about 37°C. For use after the centrifugation step, the liquid composition is preferably used at room temperature.

The invention also relates to a liquid composition as defined above, mixed with sperm.

According to a further embodiment said mixing is performed by swirling the recipient at the first stage of the processing of the sperm, after the doses are prepared, using a slowly rotating roller bank.

According to a further embodiment said sperm is of animal or human origin.

According to a further embodiment said animal is chosen from the group of sheep, cattle, pig and horse.

According to a further embodiment said sperm is filtered before mixing it with the liquid composition as defined above.

According to a further embodiment said sperm is filtered, centrifuged and concentrated before mixing it with the liquid composition as defined above.

According to a further embodiment said filtration of sperm is performed using a gauze.

According to a further embodiment said sperm is centrifuged, and the resulting supernatant is decanted or removed by suction after mixing it with the liquid composition as described above.

The sperm containing composition may be used immediately or conserved at between about 2-10°C. Accordingly, said sperm is diluted into the liquid composition as defined above reaching a sperm cell concentration between about 20-60×10⁶ cells/ml, preferably of 40×10⁶ cells/ml. Higher concentrations are also no problem, only the duration of the period in which they are to be kept becomes shorter since the nutrients will deteriorate quicker.

According to a further embodiment said sperm containing composition is used immediately to perform fertilization of oocytes, or, is conserved between about 2-10°C, preferably at about 5°C in anaerobic condition, by slowly cooling at a rate of 0.2 - 0.5°C per minute.

The sperm may be conserved for long term periods at temperatures below 0°C, i.e. the sperm is conserved frozen. For conservation below 0°C, the liquid composition described herein comprises glycerine. For various reasons, including storage efficiency, the sperm cell concentration in frozen condition will be higher than in non-frozen condition. Accordingly, the invention further relates to a liquid composition as defined herein, wherein said sperm is diluted with said liquid composition to a sperm cell concentration of between about 80-120x10⁶ sperm cells/ml, preferably of about 100x10⁶ sperm cells/ml. The sperm cell concentration may be again determined after thawing. In addition, the invention further relates to a liquid composition comprising glycerine as described infra, wherein said composition is conserved in liquid nitrogen at about -196°C, preferably after computer controlled freezing. Said computer controlled freezing may be done by slowly cooling at a rate of 0.2 - 0.5°C per minute until - 20°C after which it is snap-frozen until -196°C.

The invention also relates to the use of a composition (liquid or powder) as a sperm thinner (sperm extender).

The invention also relates to the use of a composition as defined above, for the conservation of fresh sperm.

The invention also relates to the use of a composition as defined above, for the conservation of frozen sperm, wherein said liquid composition comprises glycerine.

The invention also relates to the use of a composition as defined above, for the fertilization of oocytes.

Furthermore, the invention relates to a method for the preparation of a thinner (extender) for the conservation of frozen sperm, comprising the following steps:
a) preparing a liquid composition as defined above, and,
b) optionally, making powder of said composition for the long term conservation of said dried composition, preferably using a freeze-drying procedure.

Furthermore, the invention relates to a method for the preparation of a sperm solution for the fertilization of oocytes, comprising the following steps:
a) providing a liquid composition as described above, or a powder composition as described above,
b) if a powder composition is provided, dissolving said powder composition in water, preferably demineralised and/or sterile water, thereby providing a liquid composition,
c) optionally, storing said liquid composition at about 4°C for a maximum of 7 days, or frozen at about -20°C,
d) if said composition had been frozen, stabilizing said composition for about 30 min at 18 to 25°C, after thawing,
e) warming up said liquid composition to 37°C for about 15 min per 100 ml,
f) providing sperm,
g) optionally, filtering the sperm, preferably using a gauze,
h) mixing the composition of step e) with the sperm of step f) or g), preferably until a sperm cell concentration between about 20-60x10⁶ cells/ml, preferably of 40x10⁶ cells/ml is reached,
i) optionally centrifuging the composition of step h),
j) optionally removing the supernatant obtained by step i) by decanting or by suction,
k) optionally decreasing the temperature at a rate of 0.2-0.5°C per minute until about 5°C is reached, and,
l) optionally conserving said composition at about 5°C in an anaerobic condition.

In addition, the invention relates to a method as described above, wherein the composition of step e) is mixed with the sperm of step f) or g), to a sperm cell concentration of between about 20-60x10⁶ sperm cells/ml, preferably to about 40x10⁶ sperm cells/ml.

The present invention also relates to a method for the preparation of a sperm solution for the fertilization of oocytes, comprising the following steps:
a) providing a liquid composition as described above, wherein said liquid composition comprises glycerine,
b) optionally, storing said liquid composition at about 4°C for a maximum of 7 days, or frozen at about -20°C,
c) if said composition had been frozen, stabilizing said composition for about 30 min at 18 to 25°C, after thawing,
d) warming up the composition to the working temperature for about 15 min per 100 ml,
e) providing sperm,
f) optionally, filtering the sperm, preferably using a gauze,
g) mixing the composition of step d) with the sperm of step e) or f),
h) optionally centrifuging the composition of step g),
i) optionally removing the supernatant obtained by step h) by decanting or by suction, and resuspending the pellet comprising sperm cells in the liquid composition as defined above, wherein said liquid composition comprises glycerine, and
j) conserving said composition at about -196°C, preferably after computer controlled freezing.

Additionally, the present invention relates to the method as described supra, wherein said composition is aliquoted before conserving.

The mixing of the sperm with the composition of the invention may be done at two times of the dose preparation. The first time, the thinner for fresh semen is added after the filtration of the ejaculate. The second time, the thinner is added after centrifugation and removal of the supernatant. This time the sperm pellet is slightly stirred up and the diluent is added in the test tube. The solution for the second time has to be heated up to the temperature of the sperm, which is in this case about room temperature. Thus the solution is put long enough in advance at room temperature to reach the temperature of the sperm (about 15 minutes per 100 ml starting with a solution of 37°C, or 30 minutes per 100 ml starting with a solution of 5°C).

In addition, the present invention relates to a method to fertilize oocytes, comprising the steps as set out above for the methods for the preparation of a sperm solution for the fertilization of oocytes, and in addition, optionally, warming up the composition to about 20°C to 37°C, and, using said composition for the fertilization of oocytes.

According to a further embodiment said fertilization is performed in vitro or in vivo.

The invention also relates to a vial comprising a liquid composition as defined above or a powder composition as defined above. It will be understood that the glycerine may be packaged in a separate vial, in addition to the vial comprising the powder composition. In this respect, the vial comprising the powder composition and the vial comprising the glycerine may be furnished separately or combined. The person skilled in the art will appreciate that the term "vial" connotes any suitable package material for holding the glycerine, the liquid composition or the powder composition according to the present invention, such as, for example containers, vials, bags, and the like known in the art.

According to a further embodiment said vial comprises enough liquid or powder to make a solution required to conserve sperm necessary for at least one oocyte fertilization.

According to a further embodiment said vial is made out of glass, plastic or aluminum.

The invention also relates to a method to prepare a vial as defined above comprising the following steps:
a) providing a liquid composition as defined above, or a powder composition as defined above, and,
b) adding said composition according to step a) into a suitable vial.

### DETAILED DESCRIPTION

It will be clear that the amounts of the components of the liquid compositions in the claims are given per liter. In other words, the present invention relates to liquid compositions of any volume, comprising the amount of components as described in the claims per liter. The amount of water is adjusted to 1 liter if other or optional components are comprised in the liquid composition as described in the claims, for instance, if glycerine and/or antibiotics are added.

Milk has effective qualities in its use as a thinner. It is a buffered environment and contains components that offer protection to spermatozoids or sperm cells, such as fats, proteins and lactose.

The thinner described in the present invention is meant for internal application. It is thus essential that one uses a sanitary or purified and safe solution.

This thinner offers a relative satisfaction. The thinner is easier to prepare and clear of aspect. A method for sterilization of the solution after preparation is not necessary, if the preparation of the thinner is carried out in circumstances avoiding or preventing contamination.

If desired, the thinner can be used without adding any antibiotics to the environment as these may have an effect on the motility and the fertility of the sperm.

Sterilization of the thinner before adding the sperm by means of membrane filtration may be considered. The liquid thinner or extender composition for fresh semen (without sperm) may be sterilized using an Ultra High Temperature (UHT) method, which is well known in the art.

Long term storage of thinner can occur in small quantities at -20°C. The freeze-drying of the thinner of the present invention offers some interesting benefits. The chances of contamination have been reduced to a minimum, since only the required quantity is heated up just prior to use. A further advantage of the thinner in freeze-dried or powder conditions is the almost unlimited life cycle.

The required volume of thinner may also be made up fresh every day, at least a half hour in advance, in order to be certain that it is a homogeneous buffered solution. Additional sterilization of the thinner is not necessary when starting with sterile water and sterilized recipients. The liquid thinner solution as defined above may be immediately stored at 5°C and the required quantities may be warmed up prior to use. The excess quantity of the solution can be stored in the fridge for at least 7 days, on the condition that the solution has not been heated up. The excess quantity of thinner that has been warmed up cannot be used thereafter, except during the same day.

The thinner of the present invention offers the possibility to optimize the number of viable sperm cells. This means that a significant number of dosages may be made which contain a minimal quantity of spermatozoids which still fertilize oocytes at an acceptable rate.

The lactose and glucose quantities in the liquid thinner composition as defined above can be adapted. The motility duration of the sperm is primarily dependent on these quantities.

As with all buffers, the thinner of the present invention needs at least 30 minutes to stabilize prior to its use.

In addition to the immediate or semi-direct, e.g. within one week, use of the sperm solution to fertilize oocytes, the sperm solution may be stored for extended time periods in frozen form, before use. In general, the frozen semen is kept at -196°C, in liquid nitrogen.

If frozen semen is used, the follow up of the mare is essential. Preferably, at least twice a day the mare has to be monitored. Insemination should be realized on ovulation, or as close to ovulation as possible.

The following examples of the invention are exemplary and should not be taken as limiting in any way.

### FIGURE LEGENDS

### Figure 1.

Comparison of different thinners as set out in Example 1 (Gentse thinner (Allmed), Ovusper thinner (Virbac) and the thinner of the present invention termed "Zangersheide" thinner) for the stallions Campary Z (A), Zandor Z (B) and Ulrich Z (C).

In said comparison the % linearity greater than 40% is set out for different times of incubation of the sperm in said thinner. Linearity (LIN) equals VSL/VCL. VSL refers to Straight-line velocity and VCL refers to Curvilinear velocity. Curvilinear velocity (VCL) is characterized as the centroid-to-centroid path, and velocity along that path. Straight-line velocity (VSL) is characterized as the linear path between the first and last centroid in a sequence, and velocity along that path.

### Figure 2.

Comparison of different thinners as set out in Example 1 (Gentse thinner (Allmed), Ovusper thinner (Virbac) and the thinner of the present invention termed "Zangersheide" thinner) for the stallions Campary Z (A), Zandor Z (B) and Ulrich Z (C).

In said comparison the % straightness greater than 50% is set out for different times of incubation of the sperm in said thinner. Straightness (STR) equals VSL/VAP. VSL refers to Straight-line velocity and VAP refers to Average path velocity. Average path velocity (VAP) is characterized as the smoothed centroid-to-centroid path, as calculated by one of several smoothing algorithms, and velocity along that path. Straight-line velocity (VSL) is characterized as the linear path between the first and last centroid in a sequence, and velocity along that path.

### Figure 3.

Comparison of different thinners as set out in Example 1 (Gentse thinner (Allmed), Ovusper thinner (Virbac) and the thinner of the present invention termed "Zangersheide" thinner) for the stallions Ulrich Z (A), Zandor Z (B) and Campary Z (C).

In said comparison the % of quick cells (having a VSL of more than 30 µm/s) is set out for different times of incubation of the sperm in said thinner. Straight-line velocity (VSL) is characterized as the linear path between the first and last centroid in a sequence, and velocity along that path.

### Figure 4.

Overview of percentages of mares being in foal. Sperm of different stallions was prepared in "Zangersheide" thinner before insemination as set out in Example 3. The number of mares inseminated is given between brackets. The percentage of mares being in foal after the first cycle (insemination), second or third to five cycles is indicated.

### Figure 5.

Comparison of percentages of mares being in foal after being inseminated with sperm prepared in ovusper/Gentse thinner or "Zangersheide" thinner. Sperm of different stallions was prepared in ovusper/Gentse thinner or "Zangersheide" thinner before insemination as set out in Example 3. The number of mares inseminated is given between brackets. The percentage of mares being in foal after the first cycle (insemination), second or third to five cycles is indicated.

### Table 1.

Comparison of percentages of mares being in foal after being inseminated with sperm prepared in ovusper/Gentse thinner or "Zangersheide" thinner. Sperm of different stallions was prepared in ovusper/Gentse thinner or "Zangersheide" thinner before insemination as set out in Example 3. The number of mares inseminated is given between brackets. The percentage of mares being in foal after the first cycle (insemination), second or third to five cycles is indicated.

### Table 2.

Percentages of mares being in foal. Sperm of different stallions was prepared in "Zangersheide" thinner before insemination as set out in Example 3. The number of mares inseminated is given between brackets. The percentage of mares being in foal after the first cycle (insemination), second or third to five cycles is indicated.

### EXAMPLES

### Example 1. Preparation of the thinners used in the comparative study

The thinners used for comparison to the thinner of the present invention are purchased thinners.

Ovusper distributes via VIRBAC thinner for equine sperm based on egg yolk (VIRBAC, The Netherlands BV, Barneveld, The Netherlands). Gentse thinner, based on milk en egg yolk, is made up in the RUG (RUG faculty of Veterinary Medicine, Merelbeke, Belgium) and is distributed by Allmed (Allmed Bvba, Pulle, Belgium).

The following thinner composition according to the present invention was used.

| | |
|---|---|
| Glucose monohydrate | 27.2 g, |
| Lactose monohydrate | 1.5 g, |
| Sodium citrate dihydrate | 0.25 g, |
| Potassium citrate | 0.41 g, |
| Hepes | 4.75 g, |
| Non-fat powdered milk | 50 g, |
| optionally, antibiotics | 50 mg, and, water to 1 liter. |

### Example 2. Effect of the different thinners on the motility of the spermatozoids in vitro

Five studs were used in a comparative study with at least 3 stallions per experiment. After collection, the sperm was filtered through a gauze, centrifuged and thinned to a concentration of 40x10⁶ cells per ml in the different thinners tested out. Subsequently, all conditions were kept at 5°C, in an anaerobic environment.

The analysis of the sample was carried out following a 5-minute heating at 37°C. The quality of the sperm was evaluated by means of an automatic analysis of the motility of the spermatozoids (Hamilton Thorne Motility Analyzer IVOS; Orange Medical, Tilburg, The Netherlands). The sperm cells were monitored at 4h, 24h, 48h, 72h, 96h and 120h. The quick spermatozoids were kept as reference criteria. This means those spermatozoids with a velocity greater than 30 µm/s.

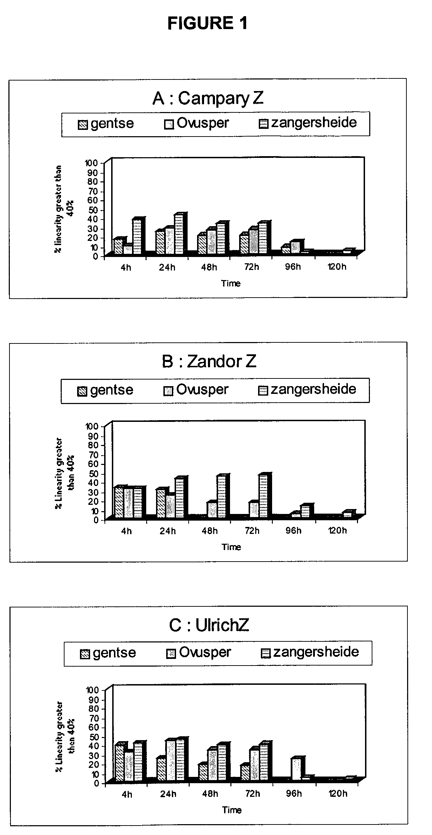

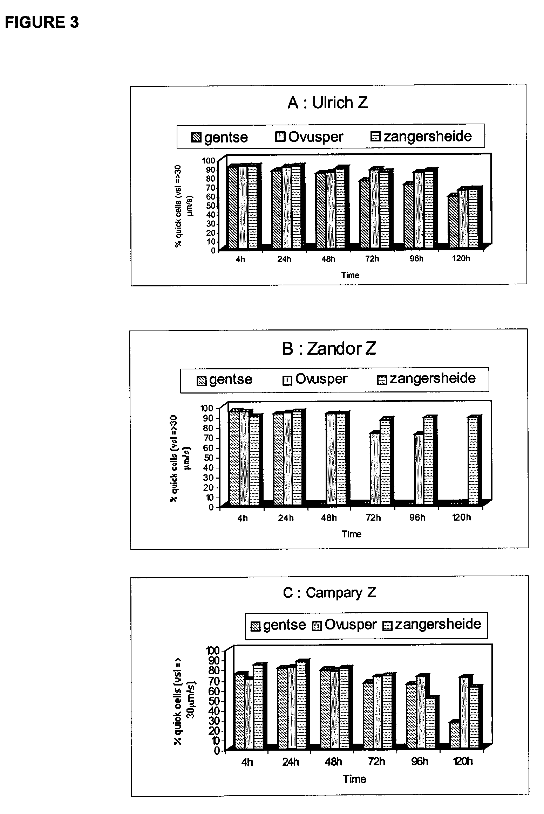

The results of the comparative experiments are shown in Figures 1 to 3.

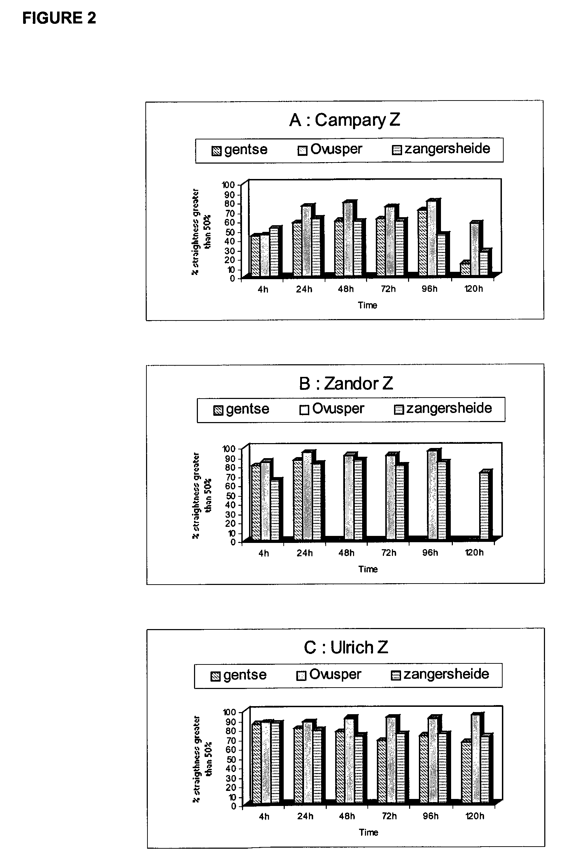

In the prior art there is no question of the straightness of the sperm. At first sight, the thinner of the present invention displays a better straightness than the other thinners (Figure 2). In general, there was no marked difference in speed at the first 24h of monitoring between the three thinners tested. However, at later time points, the spermatozoids in "zangersheide" thinner performed substantially better than the spermatozoids in "gentse" thinner. The linearity (Figure 1) may be a more important feature than the speed, as it is of utmost importance that the sperm cells get where they are needed, at the oocyte, rather than the speed in which they reach their target.

### Example 3. Effect of the different thinners on the fertility in vivo

This experiment of testing in vivo is performed with insemination every 48 hours, starting with a follicle of 33mm until the ovulation.

In order to achieve a high percentage of pregnancies, inseminations are preferably achieved at ovulations.

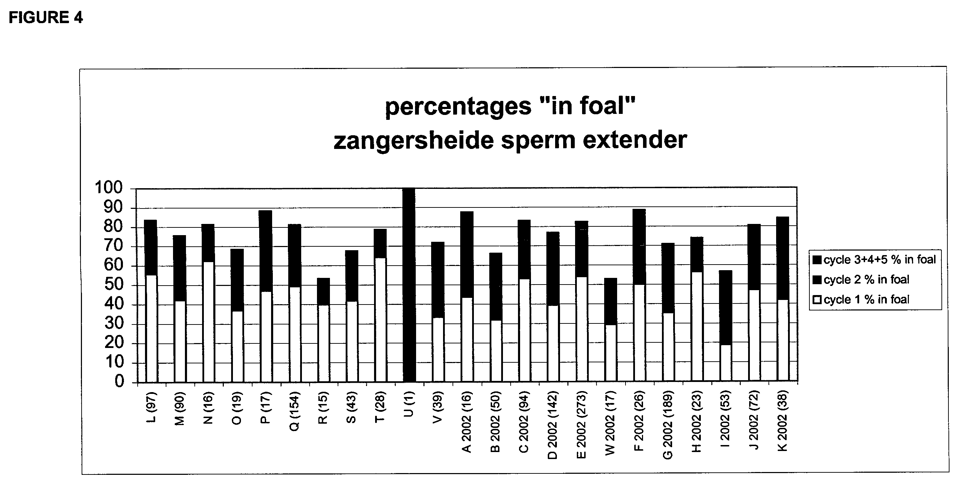

The ability of the "Zangersheide" thinner to give rise to mares being in foal was assessed. Sperm from different stallions and from different ejaculates from these stallions was prepared in "Zangersheide" thinner as set out in Example 1. These compositions were inseminated in mares, after which they were followed. If the mare was not in foal, said mare would be inseminated a second, and if necessary a third, fourth or fifth time. The number of pregnancies was determined after every insemination (Table 2). In total, ejaculates of 23 stallions were assessed, in a total of 1512 inseminations. The results are graphically depicted in Figure 4. Based on these results, it will be clear that sperm prepared in the "Zangersheide" thinner results in satisfying to very good numbers of mares being in foal.

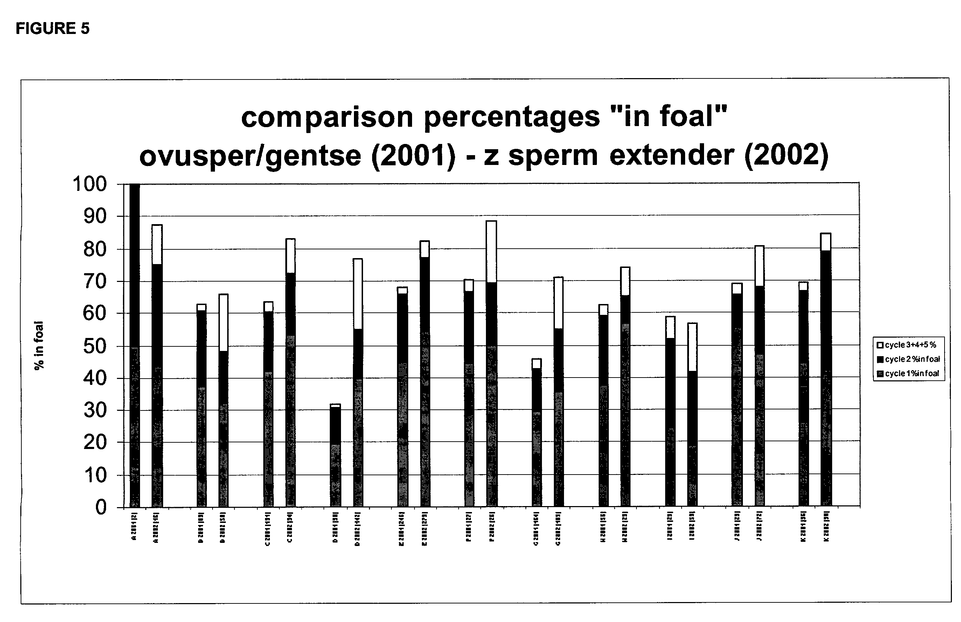

Next, a comparison was made between the ability of different thinners to give rise to mares being in foal. Sperm from different stallions and from different ejaculates from these stallions was prepared in the three different thinners as set out in Example 1. These compositions were inseminated in mares, after which they were followed. If the mare was not in foal, said mare would be inseminated a second, and if necessary a third, fourth or fifth time. The number of pregnancies was determined after every insemination (Table 1). In total, ejaculates of 11 stallions were assessed, in a total of 1883 inseminations. The results are graphically depicted in Figure 5. Based on these results, it will be clear that sperm prepared in the "Zangersheide" thinner results in more mares being in foal than with the other thinners tested.

**TABLE 1**

| name stallion breeding season (number of mares) | number mares | number 1st cycle in foal | cycle 1 % in foal | number 2nd cycle in foal | cycle 2 % in foal | cycle 3+4+5 total in foal | cycle 3+4+5 % in foal | total number in foal | total % in foal |
|---|---|---|---|---|---|---|---|---|---|
| A 2001 (2) | 2 | 1 | 50 | 1 | 50 | 0 | 0 | 2 | 100 |
| A 2002 (16) | 16 | 7 | 44 | 5 | 31 | 2 | 13 | 14 | 88 |
| | | | | | | | | | |
| B 2001 (89) | 89 | 33 | 37 | 21 | 24 | 2 | 2 | 60 | 67 |
| B 2002 (50) | 50 | 16 | 32 | 8 | 16 | 9 | 18 | 35 | 70 |
| | | | | | | | | | |
| C 2001 (131) | 131 | 55 | 42 | 24 | 18 | 4 | 3 | 94 | 72 |
| C 2002 (94) | 94 | 50 | 53 | 18 | 19 | 10 | 11 | 79 | 84 |
| | | | | | | | | | |
| D 2001 (98) | 98 | 19 | 19 | 11 | 11 | 1 | 1 | 37 | 38 |
| D 2002 (142) | 142 | 56 | 39 | 22 | 15 | 31 | 22 | 111 | 78 |
| | | | | | | | | | |
| E 2001 (246) | 246 | 110 | 45 | 52 | 21 | 5 | 2 | 178 | 72 |
| E 2002 (273) | 273 | 148 | 54 | 63 | 23 | 14 | 5 | 227 | 83 |
| | | | | | | | | | |
| F 2001 (27) | 27 | 12 | 44 | 6 | 22 | 1 | 4 | 20 | 74 |
| F 2002 (26) | 26 | 13 | 50 | 5 | 19 | 5 | 19 | 23 | 88 |
| | | | | | | | | | |
| G 2001 (164) | 164 | 48 | 29 | 22 | 13 | 5 | 3 | 89 | 54 |
| G 2002 (189) | 189 | 67 | 35 | 37 | 20 | 30 | 16 | 142 | 75 |
| | | | | | | | | | |
| H 2001 (56) | 56 | 21 | 38 | 12 | 21 | 2 | 4 | 41 | 73 |
| H 2002 (23) | 23 | 13 | 57 | 2 | 9 | 2 | 9 | 17 | 74 |
| | | | | | | | | | |
| I 2001 (29) | 29 | 7 | 24 | 8 | 28 | 2 | 7 | 18 | 62 |
| I 2002 (53) | 53 | 10 | 19 | 12 | 23 | 8 | 15 | 32 | 60 |
| | | | | | | | | | |
| J 2001 (29) | 29 | 16 | 55 | 3 | 10 | 1 | 3 | 21 | 72 |
| J 2002 (72) | 72 | 34 | 47 | 15 | 21 | 9 | 13 | 58 | 81 |
| | | | | | | | | | |
| K 2001 (36) | 36 | 16 | 44 | 8 | 22 | 1 | 3 | 26 | 72 |
| K 2002 (38) | 38 | 16 | 42 | 14 | 37 | 2 | 5 | 32 | 84 |

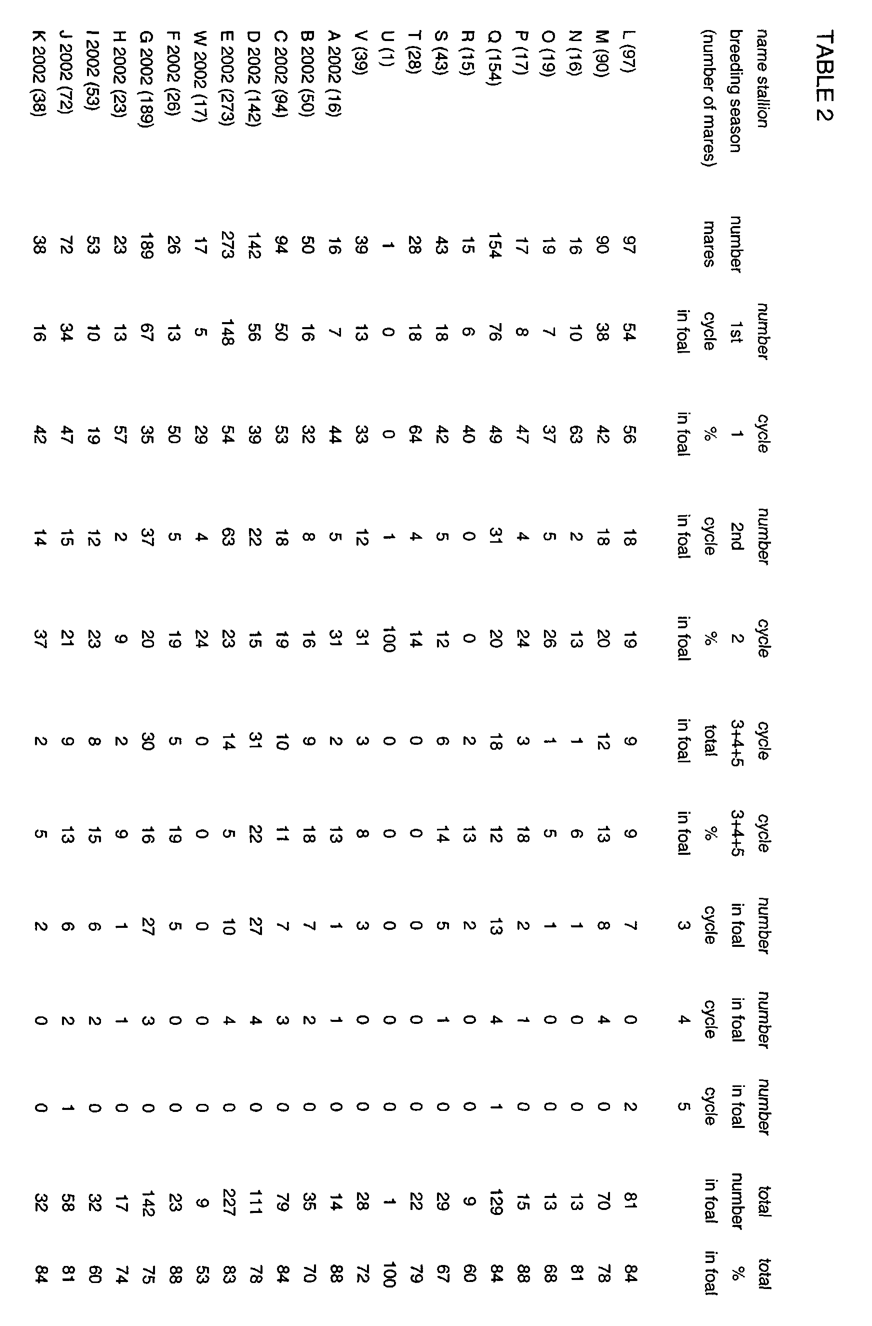

## Claims

1. A liquid composition of any volume comprising per liter:
| | |
|---|---|
| Glucose monohydrate | 0.1-50 g, |
| Lactose monohydrate | 0.1-50 g, |
| Sodium citrate dihydrate | 0.1-1 g, |
| Potassium citrate | 0.1-1 g, |
| Hepes | 0.1-10g, |
| Non-fat powdered milk | 40-60 g, |
| optionally, antibiotics | 10-100 mg, and, |
| water to 1 liter. | |

2. A liquid composition according to claim 1, further comprising 30-50 g glycerine per liter.

3. A liquid composition of any volume comprising per liter:
| | |
|---|---|
| Glucose monohydrate | 27.2 g, |
| Lactose monohydrate | 1.5 g, |
| Sodium citrate dihydrate | 0.25 g, |
| Potassium citrate | 0.41 g, |
| Hepes | 4.75 g, |
| Non-fat powdered milk | 50 g, |
| optionally, antibiotics | 50 mg, and, |
| water to 1 liter. | |

4. A liquid composition according to claim 3, further comprising 40 g glycerine per liter.

5. A liquid composition according to any of claims 1 to 4, wherein said milk is Gloria® manufactured by Nestle®.

6. A liquid composition according to any of claims 1 to 5, wherein said water is demineralised; and preferably sterilized.

7. A liquid composition according to any of claims 1 to 6, wherein said antibiotic is Gentamycin.

8. A liquid composition according to any of claims 1 to 7, wherein said liquid composition has a pH between 6.3 and 7.0.

9. A powder composition, which upon dissolving in water provides a liquid composition according to claim 1 or 3.

10. The powder composition according to claim 9, wherein said powder composition is stored in the dark at a temperature between about 15 and 25°C, optionally for an unlimited time.

11. A liquid composition prepared by dissolving a powder composition according to claim 9 or 10, using water; preferably demineralised and/or sterilized water.

12. A liquid composition according to any of claims 1 to 8 and 11, wherein said liquid composition is stored at about 5°C, or between about -15°C to -25 °C, preferably at about -20°C.

13. A liquid composition according to any of claims 1 to 8 and 11 to 12, wherein said composition is stabilized at room temperature for at least about 30 min and heated to about 37°C just before use.

14. A liquid composition according to any of claims 1 to 8 and 11 to 13, wherein said liquid composition is mixed with sperm.

15. A liquid composition according to claim 14, wherein said mixing is performed by swirling the recipient at the first stage of the processing of the sperm, after the doses are prepared, using a slowly rotating roller bank.

16. A liquid composition according to claim 14 or 15, wherein said sperm is of animal or human origin.

17. A liquid composition according to claim 16, wherein said animal is chosen from the group of sheep, cattle, pig and horse.

18. A liquid composition according to any of claims 14 to 17, wherein said sperm is filtered before mixing it with the liquid composition according to any of claims 1 to 8 and 11 to 13.

19. A liquid composition according to claim 18, wherein said filtration is performed using a gauze.

20. A liquid composition according to any of claims 14 to 17, wherein said sperm is centrifuged, the supernatant is decanted or removed by suction after mixing it with the liquid composition according to any of claims 1 to 8 and 11 to 13.

21. A liquid composition according to any of claims 14 to 20, wherein said sperm is diluted with the liquid composition according to any of claims 1 to 8 and 11 to 13 to a sperm cell concentration of between about 20-60x10⁶ sperm cells/ml, preferably of about 40x10⁶ sperm cells/ml.

22. A liquid composition according to any of claims 14 to 20, wherein said sperm is diluted with the liquid composition according to any of claims 1 to 8 and 11 to 13 to a sperm cell concentration of between about 80-120x10⁶ sperm cells/ml, preferably of about 100x10⁶ sperm cells/ml.

23. The liquid composition according to claim 22, wherein said composition is conserved in liquid nitrogen at about -196°C, preferably after computer controlled freezing.

24. The liquid composition according to claim 21, wherein said composition is used immediately to perform fertilization of oocytes, or, is conserved between about 2-10°C, preferably at about 5°C in anaerobic conditions.

25. Use of a liquid composition according to any of claims 1 to 8 and 11 to 13 as a sperm thinner.

26. Use of a liquid composition according to any of claims 1 to 8 and 11 to 13, for the conservation of fresh sperm.

27. Use of a liquid composition according to any of claims 1 to 8 and 11 to 13 for the conservation of frozen sperm, wherein said liquid composition comprises glycerine.

28. Use of a liquid composition according to any of claims 14 to 24, for the fertilization of oocytes.

29. A method for the preparation of a thinner for the conservation of frozen sperm, comprising the following steps:
a) preparing a liquid composition according to any of claims 1 to 8 and 11 to 13, and,
b) optionally, making powder of said composition for the long term conservation of said dried composition, preferably using a freeze-drying procedure.

30. A method for the preparation of a sperm solution for the fertilization of oocytes, comprising the following steps:
a) providing a liquid composition according to any of claims 1 to 8 and 11 to 13, or a powder composition according to claim 9 or 10,
b) if a powder composition is provided, dissolving said powder composition in water, thereby providing a liquid composition,
c) optionally, storing said liquid composition at about 4°C for a maximum of 7 days, or frozen at about -20 °C,
d) if said composition had been frozen, stabilizing said composition for about 30 min at 18 to 25°C, after thawing,
e) warming up said liquid composition to working temperature for about 15 min per 100 ml,
f) providing sperm,
g) optionally, filtering the sperm, preferably using a gauze,
h) mixing the composition of step e) with the sperm of step f) or g),
i) optionally centrifuging the composition of step h),
j) optionally removing the supernatant obtained by step i) by decanting or by suction,
k) optionally decreasing the temperature at a rate of 0.2-0.5°C per minute until about 5°C is reached, and,
l) optionally conserving said composition at about 5°C in an anaerobic condition.

31. The method according to claim 30, wherein the composition of step e) is mixed with the sperm of step f) or g), to a sperm cell concentration of between about 20-60x10⁶ sperm cells/ml, preferably to about 40x10⁶ sperm cells/ml.

32. A method for the preparation of a sperm solution for the fertilization of oocytes, comprising the following steps:
a) providing a liquid composition according to any of claims 2, 4 to 8 and 11 to 13, wherein said liquid composition comprises glycerine,
b) optionally, storing said liquid composition at about 4°C for a maximum of 7 days, or frozen at about -20 °C,
c) if said composition had been frozen, stabilizing said composition for about 30 min at 18 to 25°C, after thawing,
d) warming up the composition to the working temperature for about 15 min per 100 ml,
e) providing sperm,
f) optionally, filtering the sperm, preferably using a gauze,
g) mixing the composition of step d) with the sperm of step e) or f),
h) optionally centrifuging the composition of step g),
i) optionally removing the supernatant obtained by step h) by decanting or by suction, and resuspending the pellet comprising sperm cells in the liquid composition according to any of claims 2, 4 to 8 and 11 to 14, wherein said liquid composition comprises glycerine, and
j) conserving said composition at about -196°C, preferably after computer controlled freezing.

33. The method according to any of claims 29 to 32, wherein said composition is aliquoted before conserving.

34. A method to fertilize oocytes, said method comprising the steps according to any of claims 30 to 33, and in addition:
- optionally, warming up the composition to about 20°C to 37°C, and,
- using said composition for the fertilization of oocytes.

35. The method according to claim 34, whereby said fertilization is performed in vitro or in vivo.

36. A vial comprising a liquid composition according to any of claims 1 to 8 and 11 to 13, or a powder composition according to any of claims 9 to 10.

37. The vial according to claim 36, comprising enough liquid or powder to make a solution required to conserve sperm necessary for at least one oocyte fertilization.

38. The vial according to claim 36 or 37, which is made out of glass, plastic or aluminum.

39. A method to prepare a vial according any of claims 36 to 38, comprising the following steps:
a) providing a liquid composition according to any of claims 1 to 8, or a powder composition according to claim 9 or 10, and,
b) adding said composition according to step a) into a suitable vial.
